Europäisches Patentamt

European Patent Office

Office européen des brevets

(19)

(11) Veröffentlichungsnummer: **0 134 454**
**B1**

(12) EUROPÄISCHE PATENTSCHRIFT

(45) Veröffentlichungstag der Patentschrift:
01.06.88

(51) Int. Cl.⁴: **F 22 G 5/12,** F 16 K 47/00

(21) Anmeldenummer: **84107452.9**

(22) Anmeldetag: **27.06.84**

(54) **Mehrstufige geregelte Drosselvorrichtung.**

(30) Priorität: **02.07.83 DE 3323990**

(43) Veröffentlichungstag der Anmeldung:
**20.03.85 Patentblatt 85/12**

(45) Bekanntmachung des Hinweises auf die Patenterteilung:
**01.06.88 Patentblatt 88/22**

(84) Benannte Vertragsstaaten:
**AT CH FR GB IT LI SE**

(56) Entgegenhaltungen:
**DD - A - 125 437
DD - A - 148 668
DE - B - 1 151 520
DE - B - 1 250 220
DE - B - 1 945 035**

(73) Patentinhaber: **Welland & Tuxhorn, Gütersloher
Strasse 257, D-4800 Bielefeld 14 (DE)**

(72) Erfinder: **Sass, Jochen, Dipl.-Ing., Marienfelder
Strasse 69, D-4800 Bielefeld 14 (DE)**
Erfinder: **von Nordheim, Günther, Dr. Ing., Enniskillener
Strasse 107, D-4800 Bielefeld 14 (DE)**

(74) Vertreter: **Meldau, Gustav, Dipl.-Ing. et al,
Patentanwälte Dipl.-Ing. Gustav Meldau Dipl.-Phys. Dr.
H.-J. Strauss Postfach 2452 Vennstrasse 9,
D-4830 Gütersloh 1 (DE)**

**Beschreibung**

Die Erfindung bezieht sich auf eine Drosselvorrichtung zur Kühlung und Reduzierung des Druckes eines gasförmigen Mediums, insbesondere von Dampf. Dabei ist in einem senkrecht angeordneten Ventil, unterhalb eines Ventilkegelsitzes an einem beweglichen Ventilkörper ein Einström-Lochdrosselkorb ausgebildet, der beim Öffnen des Ventils von der Sitzkante im Ventilgehäuse nach und nach freigegeben wird und mit stromabwärts liegenden, feststehenden ersten und zweiten Ausströmlochdrosselkörben, sowie mit einer innerhalb des Einström-Lochdrosselkorbes angeordneten Einrichtung zur zentralen Wassereinspritzung, die fest mit dem Ventilgehäuse verbunden ist und den aus dem Einström-Lochdrosselkorb nach innen austretenden Strahlen des gasförmigen Mediums entgegengerichtete Wassereinspritz-Strahlen erzeugt.

Die Erfindung geht aus von einem Umformventil zur Druckreduzierung und Temperaturabsenkung des Dampfes durch Zuführung von Kühlwasser, bei dem eine mit Umfangsbohrungen versehene Drosselbuchse einem beweglich angeordneten Hohlkegel vorgeschaltet ist, der Hohlkegel die Drosselbohrungen der Drosselbuchse in Schliessstellung verdeckend, in einer weiteren Buchse gleitet, deren Mantelfläche über Durchgangsbohrungen verfügt, wobei in Schliessstellung der Armatur die Durchgangsbohrungen durch den Hohlkegel abgedeckt sind und bei dem weiterhin die stirnseitig als Ventilsitz ausgebildete und über Durchgangsbohrungen verfügende Buchse in ein Strömungsleitprofil übergeht, das in die Buchse hineinragt und über eine Zentralbohrung verfügt, die im Bereich der Kegelspitze des Strömungsleitprofils in mehrere Bohrungen zur Kühlwasserzuführung übergeht, wobei die von der Kegelspitze abgewandte Seite des Strömungsleitprofils über einen buchsenförmigen Ansatz verfügt, der in einer Ausdrehung des Ventilgehäuses geführt ist (DD-A 125 437). Bei einem solchen Dampfumformventil, bei dem die Wassereinspritzung den Löchern des Einström-Lochdrosselkorbes nicht entgegengerichtete Einspritzlöcher aufweist, ist es möglich, dass feuchter Dampf, der Korrosion erzeugt, nach dem Mischvorgang an die Gehäusewände gelangt.

Ein weiterer bekannter Stand der Technik (DD-A 148 668) zeigt ein Dampfumformventil mit direkter Einspritzung des Kühlwassers in einen als Drosselelement wirkenden Hohlkegel, bei dem eine an Stegen befestigte, zentral angeordnete Düse mittels eines zylindrischen Halteringes zwischen zwei Schalldämpferelementen, einem oberen und einem unteren Lochzylinder gelagert ist und wobei ein Kühlwasser-Zuführungsrohr in eine Bohrung eines der Stege eingeschoben ist, wobei im Bereich der Steckverbindung die Bohrung bzw. der Aussendurchmesser des Kühlwasser-Zuführungsrohres mit einer Ringnut versehen ist, die mittels einer oder mehrerer in Richtung des Dampfstromes weisender Bohrungen mit dem Innenraum des Gehäusedruckkörpers verbunden ist. Die langgestreckte Ausströmlochdrossel ist dabei notwendigerweise unterbrochen, gewissermassen durch eine Bauchbinde, die zur Halterung der Stege und der von der Seite her zugeführten Kühlwassereinspritzvorrichtung dient. Eine Regelung der Dampfabführung oder des Kühlwassers in Abhängigkeit voneinander ist nicht vorhanden.

Bei einer weiteren bekannten Drosselvorrichtung (DE-B 1 151 520) mit einem einen Abschlusskörper aufweisenden Ventil und einer diesen strömungsseitig nachgeschalteten, mit einer Einspritzung für das Kühlwasser versehenen Drosselstelle sowie mit einer weiter stromabwärts hinter der Drosselstelle zur Schalldämpfung angeordneten Lochblenden, wobei Drosselstelle, Einspritzung und Lochblenden in einem einzigen Bauteil zusammengefasst sind, welches in einem Sonderstutzen des Gehäuses von aussen auswechselbar eingesetzt ist, handelt es sich um ein Parabolkegelventil, bei dem eine Kühlwassereinspritzung quer zur Strömungsrichtung an einer gesondert angeordneten, dem Ventilkörper stromabwärts nachgeschalteten engsten Stelle angeordnet ist. Weiter stromabwärts sind ein oder mehrere Lochdrossel-Einrichtungen vorhanden, die jedoch zentrisch hintereinander geschaltet sind, so dass die Strömung nacheinander sämtliche dieser Lochdrosseleinrichtungen zu durchströmen hat.

Gegenüber diesem bekannten Stand der Technik hat sich die Erfindung die Aufgabe gestellt, Korrosion an den Gehäusewänden infolge feuchten Dampfes zu vermeiden. Ausserdem soll die Geräuschentwicklung bei der Dampfströmung vermindert werden und zwar über den vollen Regelbereich, der seinerseits wiederum fein verstellbar sein soll. Schliesslich soll das Bauvolumen des gesamten Ventils gering gehalten werden.

Zur Lösung dieser Aufgabe ist nach der Erfindung eine Drosselvorrichtung der eingangs beschriebenen gattungsgemässen Art dadurch gekennzeichnet, dass am Ventilkörper unterhalb des Einström-Lochdrosselkorbes ein weiterer Lochdrosselkorb ausgebildet ist, der unter Zwischenschaltung einer Ringkammer zusammen mit dem ersten feststehenden Ausström-Lochdrosselkorb beim Öffnen des Ventils nach und nach einen ersten Teilstrom erzeugt, dass von der Unterkante des Ventilkörpers der unterhalb des ersten feststehenden Ausström-Lochdrosselkorbes angeordnete zweite feststehende Ausströmlochdrosselkorb beim Öffnen des Ventils nach und nach freigegeben wird, wodurch ein zweiter Teilstrom erzeugt wird, und dass zur aufeinander abgestimmten Steuerung der Menge des einströmenden gasförmigen Mediums, der Vermischung des einströmenden Gases mit dem eingespritzten Wasser und der gleichmässigen Aufteilung des ausströmenden gasförmigen Mediums in zwei Teilströme, die Einspritzlöcher beim Öffnen des Ventils von einer Abdeckkante am Ventilkörper nach und nach freigegeben werden.

Danach werden gegenüber dem bekannten Stand der Technik beim abströmenden Dampf-Wassergemisch zwei geregelte Teilströme erzeugt, wobei gleichzeitig eine Regelung der Kühlwasserzufuhr und der Dampfzufuhr bzw. Gaszufuhr erfolgt. Durch die besondere Aufteilung und Lenkung der Strömung in zwei Teilströmen, die jeder für sich geregelt sind, wird eine Schonung des Materials des Ventils, insbesondere des Ventilgehäuses vor Korrosion bzw. Erosion durch Wärmespannungen erreicht, wobei jedoch eine optimale Vermischung von Wasser und Dampf bei praktisch verzögerungsfreier Kühlung des Dampfes erfolgt. Nach einer vorteilhaften Weiterbildung der Erfindung weist zur Steuerung des ersten Teilstromes die untere Begrenzung der Ringkammer eine Abdeckkante zur allmählichen Freigabe des unterhalb des Einström-Lochdrosselkorbes ausgebildeten weiteren Lochdrosselkorbes auf. Im Ventilkörper liegt die Abdeckkante für die Einspritzlöcher der Wassereinspritzung vorteilhaft auf gleicher Höhe wie der Ventilkegel. Die feststehenden Ausström-Lochdrosselkörbe sind von einem Abströmraum umgeben, dessen Durchmesser etwa doppelt so gross ist wie der Durchmesser eines Ausström-Lochdrosselkorbes und dessen Abströmraum an der Oberseite domartig ausgebildet ist. Der Boden des zweiten feststehenden Ausström-Lochdrosselkorbes ist mit einem entgegen der Strömung gerichteten Kegel versehen, der bis in die Höhe der Oberkante des zweiten Ausströmlochdrosselkorbes reicht.

Die Einspritzung des Kühlwassers ist derart ausgebildet, dass sie das Kühlwasser weiter verteilt und bei der Dampfeinströmung entgegengesetzt gerichtet ist, so dass eine optimale Vermischung von Kühlwasser und Dampf im freien Raum erfolgt, ohne dass Wandungen des Ventilkörpers oder des Gehäuses beaufschlagt werden und damit negative Wirkungen entstehen, wie örtliche hohe Temperaturunterschiede, insbesondere im Wandungsmaterial, die zu einer frühen Ermüdung des Materials und auch zu Spannungsrissen und -ausbrüchen führen können.

Durch die Strömungsteilung wird unterhalb der ersten Drosselstufe und der Wassereinspritzung eine weitere Entspannung erreicht. Durch die Anordnung von zwei geregelten, weiteren Lochdrosseln untereinander – in Strömungsrichtung hintereinander – innerhalb eines domartig ausgebildeten Abströmraumes wird erreicht, dass nach der weiteren Entspannung durch Strömungsteilung diese derart geführt ist, dass eine Aufteilung in Heissdampf und Feuchtdampf erfolgt. Dabei ist der Heissdampf an der Gehäusewandung anliegend geführt und schützt diese damit vor dem Feuchtdampf und damit auch vor Korrosion bzw. Erosion durch Wärmeschock. Durch die Anordnung der Abdeckkante für die Löcher der Wassereinspritzung auf gleicher Höhe mit dem Ventilkegel im Ventilkörper wird erreicht, dass die Steuerung der Dampfdurchströmung und des eingespritzten Kühlwassers auf sehr einfache Weise über den gesamten Regelbereich unmittelbar voneinander abhängig und damit optimal erfolgt. Auch eine erhebliche Verringerung der Gesamtabmessungen der Drosselvorrichtung ist die Folge dieser Anordnung, ohne dass damit Nachteile in Kauf zu nehmen sind.

Durch die Dimensionierung und besondere Ausbildung des Abströmraumes wird optimaler Schutz vor Korrosion und Erosion der Wandungen dieses Abströmraumes innerhalb des Ventilkörpers erreicht, bei sehr geringem Bauvolumen und andererseits strömungsgünstiger Ausbildung mit der Folge einer hervorragenden Durchmischung der einzelnen Teilströme, insbesondere auch mit dem Kühlwasser. Dabei wird durch den Einbau eines entgegen der Strömung gerichteten Kegels auf dem Boden der letzten feststehenden Ausströmdrossel die Strömung weiterhin günstig und positiv beeinflusst. Versuche haben gezeigt, dass die Vermischung von Kühlwasser und Dampf in der Drosselvorrichtung nach der Erfindung so intensiv ist, dass bereits am Ventilaustritt trockener Dampf vorliegt.

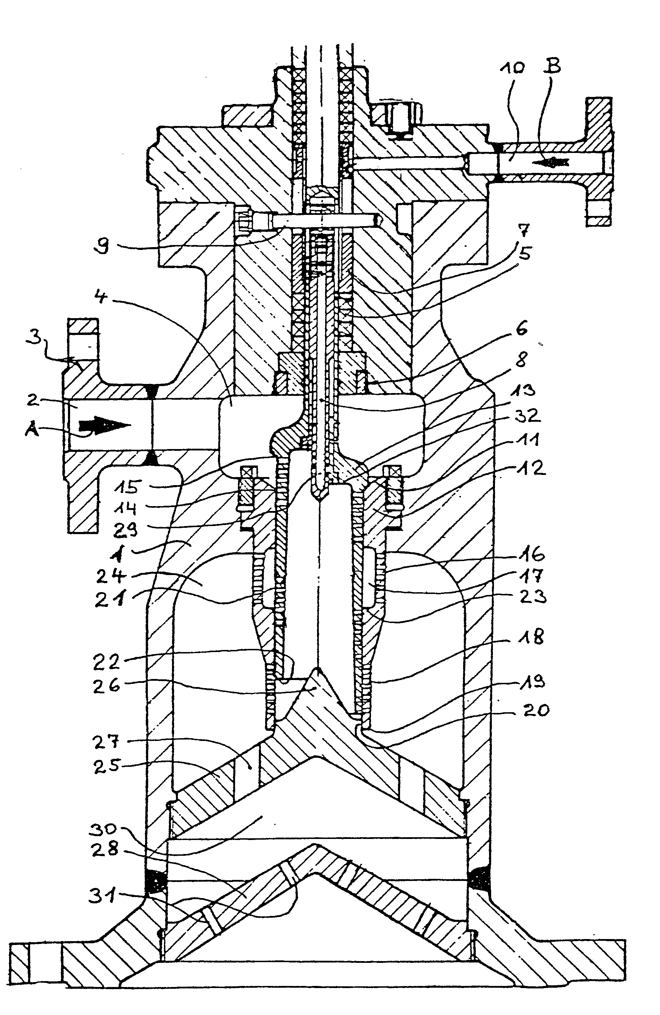

Die Erfindung wird nachstehend anhand eines Ausführungsbeispiels mit Bezug auf die Zeichnung näher erläutert. In der Zeichnung ist eine Drosselvorrichtung nach der Erfindung im axialen Längsschnitt dargestellt, wobei in üblicher Weise die linke Seite eine halb geöffnete Stellung, die rechte Seite die geschlossene Stellung des Ventils wiedergibt.

In dem Ventilgehäuse 1 ist ein Einströmstutzen 2 mit Anschlussflansch 3 angeordnet. Die Einströmung ist durch den Pfeil A dargestellt und führt in eine Ventilkammer 4.

Oberhalb der Ventilkammer 4 ist mit Stopfbuchsen 5 und Dichtungen 6 der Schaft 7 des Ventilkörpers geführt. Innerhalb dieses Schaftes 7 ist das Zuführungsrohr 8 für das Kühlwasser gelagert und mit einem Stift 9 fest mit dem Ventilgehäuse verbunden. Für den Ventilschaft 7 sind an der Durchdringung des Stiftes 9 Langlöcher ausgespart. Die Kühlwasserzuführung 10 entsprechend dem Pfeil B erfolgt oberhalb des Stiftes 9 und des oberen Ende des gehäusefesten Zuführungsrohres 8.

Im Boden der Ventilkammer 4 befindet sich der Ventilsitz 11, der den oberen Anschluss eines Gehäuseeinsatzes 12 bildet. Darüber ist der Ventilschaft 7 verbreitert zum Ventilkörper 13, der einen Einström-Lochdrosselkorb 14 ausbildet, über dem der Ventilkegel bzw. -sitz 15 am Ventilkörper angeformt ist. Der Einsatz 12 im Ventilgehäuse bildet unterhalb des Ventilsitzes 11 im Abstand einen feststehenden ersten Ausström-Lochdrosselkorb 16 als erste Ausströmdrossel, der eine Ringkammer 17 umschliesst. Im definierten Abstand darunter ist in dem Einsatz 12 ein weiterer zweiter Ausström-Lochdrosselkorb 18 als zweite Ausströmdrossel ausgebildet. Das untere Ende 19 des Einsatzes 12 unterhalb des zweiten Ausström-Lochdrosselkorbes 18 ist dicht auf einen Boden 20 aufgesetzt.

Innerhalb des Einsatzes 12 ist der Ventilkörper 13 geführt, der von dem oberen Einström-Lochdrosselkorb 14 ausgehend einen Hohlzylinder mit gleichem Durchmesser ausbildet. In Abstand unterhalb des ersten Einström-Lochdrosselkorbes 14 ist ein weiterer Lochdrosselkorb 21 im Ventilkörper ausgebildet, der bei geschlossenem Ventil (rechte Seite der Zeichnung) von der Dichtfläche des Ventilgehäuseeinsatzes 12 zwischen dem ersten Ausström-Lochdrosselkorb 16 mit Ringraum 17 und dem darunter liegenden zweiten Ausström-Lochdrosselkorb 18 verdeckt wird. Bei vollständig geöffnetem Ventil liegt dieser Lochdrosselkorb 21 des Ventilkörpers etwa auf gleicher Höhe mit der Ringkammer 17 und dem äusseren Ausström-Lochdrosselkorb 16 des Einsatzes 12.

Unterhalb des Lochdrosselkorbes 21 im Ventilkörper ist dieser noch weitergeführt, so dass er in geschlossener Stellung den zweiten Ausström-Lochdrosselkorb 18 (rechte Seite der Zeichnung) am unteren Ende des Ventilkörpereinsatzes 12 abdeckt und in geöffneter Stellung diesen zweiten Ausström-Lochdrosselkorb 18 vollständig frei gibt. Die Unterkante 22 des zylindrischen Teils des Ventilkörpers dient dabei als Regelkante für den unteren zweiten Ausström-Lochdrosselkorb 18 des Einsatzes 12. Wie zu erkennen ist, bildet die untere Kante 23 der Ringkammer 17 des Einsatzes 12 die Regelkante für den unteren Lochdrosselkorb 21 des Ventilkörpers. Die Regelkante des oberen Einström-Lochdrosselkorbes 14 wird durch den Ventilsitz 11 gebildet.

Der Ventilgehäuse-Einsatz 12 ist umgeben von einem Abströmraum 24, der unmittelbar an dem Beginn des oberen, ersten Ausström-Lochdrosselkorbes 16 des Einsatzes 12 beginnt und dort domartig ausgebildet ist. Der Durchmesser des Abströmraumes 24 ist etwa doppelt so gross wie der Durchmesser des Gehäuseeinsatzes 12. Der Abströmraum 24 ist an seiner Unterseite von einem Boden 25 abgeschlossen. Dieser Boden dient gleichzeitig auch als Boden 20 des Gehäuseeinsatzes 12 und kann die Dichtung 20a ausbilden. Innerhalb dieses Gehäuseeinsatzes und damit auch innerhalb des zylinderförmig ausgebildeten Ventilkörpers ist der Boden 20 als spitzer Kegel 26 ausgebildet, dessen Spitze bis etwa zur Höhe des Beginns des unteren zweiten Ausström-Lochdrosselkorbes 18 in dem Gehäuseeinsatz 12 reicht. Ausserhalb des Gehäuseeinsatzes 12 ist der Boden 25 ebenfalls kegelförmig, jedoch mit flacherer Stellung ausgebildet, und mit Löchern 27 versehen, die schräg angestellt sind. Der Boden 25 mit den schräg angestellten Löchern 27 bildet daher einen sogenannten Zykloneinsatz. Der gesamte Durchströmungsquerschnitt der Löcher 27 dieses Zykloneinsatzes ist grösser oder gleich dem gesamten Durchströmungsquerschnitt der beiden Ausström-Lochdrosselkörbe 16 und 19 in dem Gehäuseeinsatz 12.

Unterhalb des den Zykloneinsatz bildenden Bodens 25 ist im Abstand eine kegelig ausgebildete Lochscheibe 28 angeordnet.

Die Funktion der Drossel- und Kühleinrichtung nach der Erfindung wird für die Dampfdrosselung und -kühlung wie folgt beschrieben:

Bei halbgeöffnetem Ventil, entsprechend der Stellung in der linken Seite der Zeichnung strömt Dampf entsprechend dem Pfeil A in den Raum 4 oberhalb des Ventils ein. Durch den Einström-Lochdrosselkorb 14 im Ventilkörper strömt er von allen Seiten her radial gegen die Achse des Ventilkörpers gerichtet ein und damit gegen das untere Ende des der Wassereinspritzung dienenden Zuführungsrohres 8, das an seinem Umfang mit Einspritzlöchern 29 versehen ist. Eine Abdeckkante 32, ausgebildet an dem das feststehende Wassereinspritzrohr 8 übergreifenden beweglichen Ventilkörper 13, gibt abhängig von der Stellung des Ventilkörpers die Einspritzlöcher 29 frei. Die Abdeckkante 32 liegt auf gleicher Höhe mit dem Ventilkegel am Ventilkörper.

Das Kühlwasser strömt entsprechend dem Pfeil B in die Kühlwasserzuführung 10 und danach in das zentral und gehäusefest angeordnete Zuführungsrohr 8 ein; aus den radial angeordneten Einspritzlöchern 29 am unteren Ende des Kühlwasserrohres tritt das Kühlwasser in einzelnen Strahlen den Dampfstrahlen entgegengerichtet in den Zylinderraum des Ventilkörpers ein, so dass eine innige Vermischung von Dampf und Kühlwasser stattfindet, wobei das Kühlwasser durch den entgegengerichteten Dampfstrahl fein zerteilt wird. Die Durchmischung von Dampf und Kühlwasser findet im freien Raum statt, wobei beide Einspritzstrahlen nach unten in Ausströmrichtung umgelenkt werden. Durch die erzeugte Verwirbelung der einander entgegengesetzt gerichteten Einspritzstrahlen erfolgt eine weitere Verwirbelung und damit intensive Durchmischung auf kürzester Strecke.

Trotz dieser intensiven Vermischung wird jedoch erreicht, dass bei der ersten weiteren Entspannungsmöglichkeit durch den Drosselkorb 21 mit Zylinderkörper, die Ringkammer 17 im Gehäuseeinsatz 12 und den umgebenden ersten Ausström-Lochdrosselkorb 16 im Gehäuseeinsatz 12 im wesentlichen trocknender Heissdampf zunächst entspannt und in den domartig ausgebildeten Abströmraum 24 einströmt und sich an dessen Wandung anlegt. Der dann aus dem unteren zweiten Ausström-Lochdrosselkorb 18 im Gehäuseeinsatz 12 ausströmende Dampf ist wesentlich feuchter, er kann jedoch die Wandungen des Abströmraumes 24 nicht erreichen, weil an diesen die Strömung des trockenen Heissdampfes anliegt. Dadurch wird eine sehr wesentliche Materialschonung und erhebliche Geräuschverminderung erreicht. Durch den nachgeschalteten Zykloneinsatz im Boden 25 wird dann eine endgültige und vollständige Vermischung von Heissdampf und Feuchtdampf in dem nachgeschalteten Raum 30 erreicht, so dass die Ausströmung durch die Lochscheibe 28 völlig gleichmässig ist und durch viele kleine Durchströmlöcher 31 beruhigt und gleichgerichtet wird.

# Patentansprüche

1. Drosselvorrichtung zur Kühlung und Reduzierung des Druckes eines gasförmigen Mediums, insbesondere von Dampf, mit einem senkrecht angeordneten Ventil, bei dem unterhalb eines Ventilkegelsitzes (11) an einem beweglichen Ventilkörper (13) ein Einström-Lochdrosselkorb (14) ausgebildet ist, der beim Öffnen des Ventils von der Sitzkante im Ventilgehäuse (1) nach und nach freigegeben wird, und mit strömabwärts liegenden feststehenden ersten und zweiten Ausström-Lochdrosselkörben (16 und 18), sowie mit einer innerhalb des Einström-Lochdrosselkorbes (14) angeordneten Einrichtung zur zentralen Wassereinspritzung, die fest mit dem Ventilgehäuse (1) verbunden ist und den aus dem Einström-Lochdrosselkorb (14) nach innen austretenden Strahlen des gasförmigen Mediums entgegengerichtete Wassereinspritzstrahlen erzeugt, dadurch gekennzeichnet, dass am Ventilkörper (13) unterhalb des Einström-Lochdrosselkorbes (14) ein weiterer Lochdrosselkorb (21) ausgebildet ist, der unter Zwischenschaltung einer Ringkammer (17) zusammen mit dem ersten feststehenden Ausström-Lochdrosselkorb (16) beim Öffnen des Ventils nach und nach einen ersten Teilstrom erzeugt, dass von der Unterkante (22) des Ventilkörpers (13) der unterhalb des ersten feststehenden Ausström-Lochdrosselkorbes (16) angeordnete zweite feststehende Ausström-Lochdrosselkorb (18) beim Öffnen des Ventils nach und nach freigegeben wird, wodurch ein zweiter Teilstrom erzeugt wird, und dass zur aufeinander abgestimmten Steuerung der Menge des einströmenden gasförmigen Mediums, der Vermischung des einströmenden Gases mit dem eingespritzten Wasser und der gleichmässigen Aufteilung des ausströmenden gasförmigen Mediums in zwei Teilströme, die Einspritzlöcher (29) beim Öffnen des Ventils von einer Abdeckkante (32) am Ventilkörper (13) nach und nach freigegeben werden.

2. Drosselvorrichtung nach Anspruch 1, dadurch gekennzeichnet, dass zur Steuerung des ersten Teilstromes die untere Begrenzung der Ringkammer (17) eine Abdeckkante (23) zur allmählichen Freigabe des unterhalb des Einström-Lochdrosselkorbes (14) ausgebildeten weiteren Lochdrosselkorbes (21) aufweist.

3. Drosselvorrichtung nach Anspruch 1 oder 2, dadurch gekennzeichnet, dass im Ventilkörper (13) die Abdeckkante (32) für die Einspritzlöcher (29) der Wassereinspritzung auf gleicher Höhe wie der Ventilkegel (15) liegt.

4. Drosselvorrichtung nach einem der vorstehenden Ansprüche, dadurch gekennzeichnet, dass die feststehenden Ausström-Lochdrosselkörbe (16, 18) von einem Abströmraum umgeben sind, dessen Durchmesser etwa doppelt so gross wie der Durchmesser eines Ausström-Lochdrosselkorbes ist und dessen Abströmraum an der Oberseite domartig ausgebildet ist.

5. Drosselvorrichtung nach einem der vorstehenden Ansprüche, dadurch gekennzeichnet, dass der Boden (20) des zweiten feststehenden Ausström-Lochdrosselkorbes (18) mit einem entgegen der Strömung gerichteten Kegel (26) versehen ist, der bis in die Höhe der Oberkante des zweiten Ausström-Lochdrosselkorbes reicht.

# Claims

1. Throttle device for cooling and reducing the pressure of a gaseous medium, more particularly steam, whereby in a vertically arranged valve, beneath a valve bevel seat (11) and on a movable valve element (13) there is an admission apertured throttle basket (14), which, when the valve is opened, is gradually uncovered from the seat edge in the valve casing (1) and with downstream fixed first and second outflow apertured throttle baskets (16 and 18), and with a device arranged within the admission apertured throttle basket (14) for central water injection, which is firmly connected to the valve casing (1) and produces the water injection streams opposing the gaseous medium stream emerging from the admission apertured throttle basket (14) towards the inside, characterised in that below the admission apertured throttle basket (14) on valve body (13) there is a further apertured throttle basket (14), which with an intermediate annular chamber (17) together with the first fixed outflow apertured throttle basket (16) gradually produces a first part flow when the valve is opened, in that from the lower edge (22) of the valve body (13), the second fixed outflow apertured throttle basket (18) arranged under the first fixed outflow apertured throttle basket (16) is gradually uncovered when the valve is opened, whereby a second part flow is produced, and that for matched control of the quantity of gaseous medium flowing in, mixing of the gas flowing in with the injected water and the even separation of the outflowing gaseous medium into two part flows, the injection apertures (29) are gradually uncovered when the valve is opened from a covering edge (32) on the valve body (13).

2. Throttle device according to claim 1 characterised in that in order to control the first part flow, the lower limit of the annular chamber (17) has a covering edge (23) for the gradual uncovering of the further apertured throttle basket (21) arranged under the admission apertured throttle basket (14).

3. Throttle device according to claim 1 or 2 characterised in that in the valve body (13) the covering edge (32) for the injection apertures (29) of the water injection device is at the same level as the valve bevel (15).

4. Throttle device according to one of the above claims, characterised in that the fixed outflow apertured throttle baskets (16, 18) are surrounded by an outflow area (24), the diameter of which is approximately twice the diameter of an outflow apertured throttle basket and the outflow area of which is dome-shaped at the top.

5. Throttle device according to one of the above claims characterised in that the base (20) of the second fixed outflow apertured throttle basket (18) is provided with a bevel (26) opposing the flow, the bevel extending to the level of the upper edge of the second outflow apertured throttle basket.

**Revendications**

1. Dispositif d'étranglement pour le refroidissement et la réduction de pression d'un milieu gazeux, en particulier de vapeur, comportant une vanne disposée verticalement qui présente une grille d'étranglement d'entrée (14) disposée sur une partie mobile (13) de la vanne en dessous du siège conique (15) de celle-ci, grille qui est libérée progressivement lors de l'ouverture de la vanne à partir du siège situé dans son corps, une première et une seconde grilles fixes d'étranglement de sortie (16 et 18) disposées en aval, et un dispositif solidaire du corps (1) de la vanne, interne à la grille d'étranglement d'entrée (14), destiné à l'injection centrale d'eau et engendrant des jets d'eau dirigés en sens inverse des jets du milieu gazeux dirigés vers l'axe et sortant de la grille d'étranglement d'entrée (14), caractérisé en ce qu'une grille d'étranglement supplémentaire (21) est prévue sur la partie mobile (13) de la vanne, en-dessous de la grille d'entrée (14), laquelle grille supplémentaire (21) engendre par l'interposition d'une chambre annulaire (17) et en liaison avec la première grille fixe d'étranglement de sortie (16), un premier courant partiel lors de l'ouverture progressive de la vanne, et en ce que la seconde grille fixe de sortie (18) disposée en dessous de la première grille fixe de sortie (16) est libérée progressivement lors de l'ouverture de la vanne par le bord inférieur (22) de la partie mobile (13) de celle-ci, ce qui engendre un second courant partiel, et en ce que les trous d'injection d'eau (29) sont libérés progressivement lors de l'ouverture de la vanne par un autre rebord (32) de la partie mobile (13) de celle-ci pour obtenir un réglage prédéterminé et concordant du volume du courant gazeux entrant, du mélange du gaz entrant avec l'eau injectée et du partage régulier du courant gazeux sortant en deux courants partiels.

2. Dispositif d'étranglement suivant la revendication 1, caractérisé en ce que la limite inférieure de la chambre annulaire (17) présente un rebord (23) de délimitation pour l'ouverture progressive de la grille d'étranglement supplémentaire (21) disposée en dessous de la grille d'étranglement d'entrée (14), en vue du contrôle du premier courant partiel.

3. Dispositif d'étranglement suivant l'une quelconque des revendications 1 ou 2, caractérisé en ce que le rebord (32) de délimitation d'ouverture pour les trous d'injection (29) de l'injecteur d'eau, est situé sur la partie mobile (13) de la vanne au même niveau que son siège conique mobile (15).

4. Dispositif d'étranglement suivant l'une quelconque des revendications précédentes, caractérisé en ce que les grilles d'étranglement de sortie fixes (16 et 18) sont entourées par une chambre de détente (24) dont le diamètre est sensiblement le double du diamètre de l'une des grilles d'étranglement de sortie et dont la partie supérieure est en forme de dôme.

5. Dispositif d'étranglement suivant l'une quelconque des revendications précédentes, caractérisé en ce que le fond (20) de la seconde grille fixe d'étranglement de sortie (18) est pourvu d'un cône (26) orienté en sens contraire du courant et s'étendant jusqu'au niveau du bord supérieur de la seconde grille d'étranglement de sortie.